(19) Europäisches Patentamt
European Patent Office
Office européen des brevets

(11) Publication number: **0 056 664**
**B1**

(12) # EUROPEAN PATENT SPECIFICATION

(45) Date of publication of patent specification: **12.11.86**

(21) Application number: **82102622.6**

(22) Date of filing: **21.09.79**

(60) Publication number of the earlier application in accordance with Art. 76 EPC: **0 009 411**

(51) Int. Cl.$^4$: **C 08 F 20/60,** C 08 F 20/34, C 08 F 220/60, C 08 F 220/34, G 03 C 5/54

(54) **Addition polymers and metal complexes thereof.**

(30) Priority: **21.09.78 US 944477**
**13.11.78 US 960213**

(43) Date of publication of application:
**28.07.82 Bulletin 82/30**

(45) Publication of the grant of the patent:
**12.11.86 Bulletin 86/46**

(84) Designated Contracting States:
**BE CH DE FR GB**

(56) References cited:
**FR-A-2 003 003**
**FR-A-2 249 366**

(73) Proprietor: **EASTMAN KODAK COMPANY**
**343 State Street**
**Rochester New York 14650 (US)**

(72) Inventor: **Archie, William Councill, Jr.**
**Kodak Park**
**Rochester New York (US)**
Inventor: **Campbell, Gerald Allan**
**Kodak Park**
**Rochester New York (US)**
Inventor: **Petrak, Karel Ladislav**
**Kodak House Station Road**
**Hemel Hempstead Hertfordshire (GB)**

(74) Representative: **Baron, Paul Alexander Clifford et al**
**Kodak Limited Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 056 664 B1

**Description**

This invention relates to polymers which coordinate with metal ions and to metal complexes thereof.

Use of various dyes and dye-forming materials in photographic processes, particularly in image transfer processes, is known. In many such cases dye image stability has been a problem. Dyes tend to wander from the image-receiving layer after processing. Also, dyes may undergo degradation during storage of the recording material prior to use. It is also recognized that dye images fade due to exposure to light over a period of time.

Use of metal complexes of some ortho substituted azo dyes in image-transfer processes is known to reduce fading. These metal-dye complexes have been found to be very light resistant.

In an alternative approach, a metallic salt or complex can be located in a receiving layer and the dye or dye-forming material can be metallizable rather than premetallized. That is, the dye or dye-forming material contains groups which will chelate with metal ions to form a metallized dye in the image-receiving layer.

Metal ions coated in the receiving layer tend to diffuse out of the layer in which they were coated. This causes deleterious sensitometric effects in light-sensitive emulsion layers. There can also be an increase in access time for viewing a transferring image due to premature metallization of dyes in layers other than the receiving layer. The invention of European Patent Specification 0,009,411 from which the present Application is divided solves these problems by the use of polymer having metal chelating groups which prevents unwanted migration of incorporated metal ions.

Specifically, the parent specification 0,009,411 provides an image transfer photographic recording material which comprises a support carrying thereon at least one layer containing a photosensitive silver halide emulsion having associated therewith a dye ligand or dye ligand forming material; a dye image-receiving layer containing a dye mordant; an alkaline processing composition and means for discharging same within said recording material in contact with said photosensitive layer; a silver halide developing agent; and polyvalent metal ions characterized in that said material contains a polymer which contains a ligand group capable of forming a coordination complex with the metal ions, said complex having a stability constant of at least $10^{10}$, the polymer being located in the mordant layer or in a layer adjacent thereto, and said metal ions being complexed by the polymer or located in a layer adjacent to said polymer layer in which case said polymer layer is located between said metal ions and said dye ligand or dye ligand forming material.

According to the present invention there are provided polymers useful in the invention of the parent specification which comprise units of the formula:—

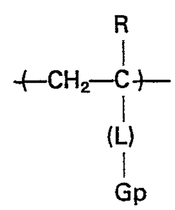

wherein:

R is H, halogen or an alkyl group containing from 1 to 6 carbon atoms;

L is a single bond or a bivalent linking group between the carbon atom of the vinyl group and Gp,

Gp is a group having one of the following formulae:

$$-N(CH_2COO^-M^+)_2;$$

or

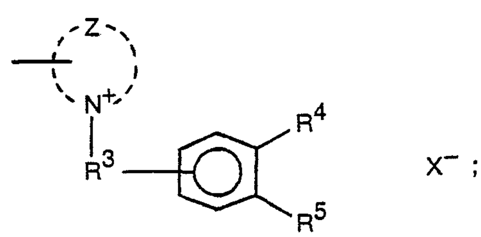

wherein:

$M^+$ is $H^+$, an ammonium or an alkali metal ion;

Z represents the atoms necessary to complete a heterocyclic nucleus which may be substituted;

$X^-$ is an anion; and

R, $R^3$, $R^4$ and $R^5$ are as defined below.

A polymer in accordance with this invention can comprise from 5 to 100 weight percent of recurring units having the structure:

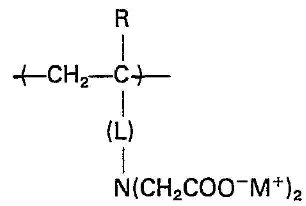

wherein:

R is H, halogen or an alkyl group containing from 1 to 6 carbon atoms;

L is a single bond or a bivalent linking group; and

$M^+$ is $H^+$, an ammonium cation or an alkali metal ion.

The corresponding metal complex formed from the polymer described above has the structure:

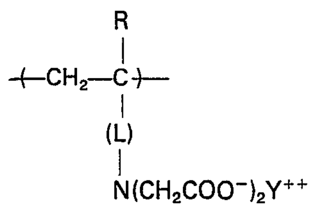

wherein:

Y is a metal such as described below; and

R and L are as described above.

Polymers having this structure can be prepared by polymerizing the monomer as described in Morris et al, J.A.C.S., *81,* 377 (1959), and as further described in examples below.

Copolymers formed from N-vinylbenzyliminodiacetic acid and either acrylamide or anionic sulfonate monomers form stable, water-soluble or water-dispersible chelates to metal ions. These chelates can be used by coating a single layer rather than coating two or more layers. Such copolymers comprise units having the formula:

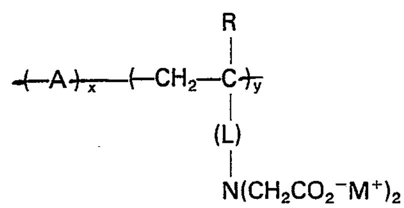

wherein:

A is one of the following units:

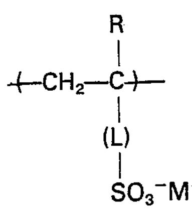 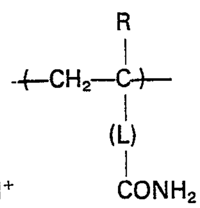

wherein:

R, L and M are as defined above;

x is from 20 to 95 percent by weight and preferably from 20 to 60 percent by weight; and

y is from 80 to 5 percent by weight and preferably from 20 to 40 percent by weight.

In a preferred embodiment L is phenylenemethylene, phenylene, carbonyloxyethylene, 2-carbonylimino-2-methyl-1, 2-propylene or carbonyliminoethylene and M is hydrogen, ammonium, tetraethylammonium, potassium, sodium or lithium.

In a particularly preferred embodiment, the polymer also comprises units $-(B)_z-$, wherein B is a recurring unit capable of mordanting photographic dyes and z is from 0 to 60 percent by weight, preferably from 0 to 40 percent by weight. (B) preferably comprises polymers having pendant tertiary or quaternary nitrogen groups such as vinylbenzyldimethylbenzylammonium chloride as described in U.S. Patent 3,958,995; vinylbenzyltrihexylammonium chloride as described in U.S. Patent 3,898,088, and other quaternary ammonium salts such as described in U.S. Patents 3,758,445; 3,709,690; 3,788,855; 3,962,527; 3,625,694 and 3,868,252; materials such as described in U.S. Patent 3,557,066 and other cationic mordants

such as described in U.S. Patent 3,488,706 and vinylimidazolium salts such as described in *Research Disclosure* 12045.

Preferred polymers are poly(acrylamide-co-vinyl-benzyliminodiacetic acid, disodium salt), poly(2-sodiosulfoethyl methacrylate-co-vinylbenzyliminodiacetic acid, disodium salt).

The above polymers can be prepared by merely polymerizing (A), and optionally (B), with the monomer

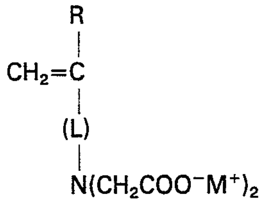

wherein:

R, L and M are as described above.

The polymerization can be carried out in a solvent or water and with or without a catalyst such as benzoyl peroxide, potassium persulfate, 2,2'-azobis(2-methylpropionitrile).

The metallized polymer comprises units having the formula:

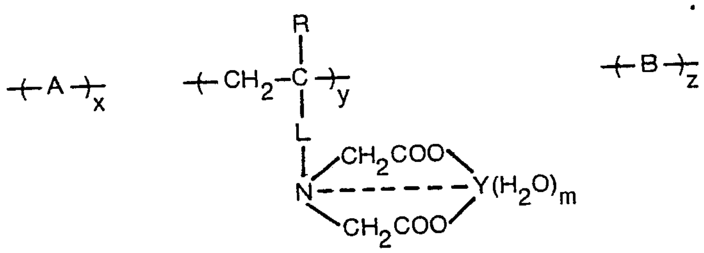

wherein:

A, B, R, L, x, y and z are as described above;

m is 1, 2 or 3; and

Y is a metal such as described below.

Preferred metallized polymers are nickel poly(2-sodio-sulfoethyl methacrylate-*co*-N-vinylbenzyliminodiacetic acid) (50:50), and nickel poly(acrylamide-*co*-vinylbenzyliminodiacetic acid) (80:20), nickel (II) chelate.

The metallized polymers are formed by merely adding the non-metallized polymer to a solution of a salt of metal ions such as a solution of a salt of the metal ions in water or a solvent such as methanol, ethanol, alcohol-water mixtures. Preferred sources of metal ions are water soluble salts such as water-soluble nickel chloride, acetate, sulfate and water-soluble copper chloride, acetate, sulfate.

Another polymer in accordance with this invention is a water-soluble polymer comprising a recurring unit of the formula:

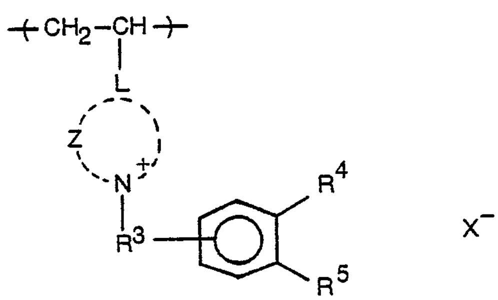

wherein:

L, Z and X are as described above;

$R^3$ is a single bond or an alkylene group; and

$R^4$ and $R^5$ are independently chelating groups.

Z represents the atoms necessary to complete nitrogen-containing heterocyclic nucleus, preferably containing from 5 to 7 members in the ring, such as pyridine; imidazole; quinoline; isoquinoline; phenanthridine; phenanthroline; pyrimidine; benzothiazole; benzothiadiazol; purine; pyrazine; and acridine. The heterocyclic group can contain other hetero atoms, such as oxygen and sulfur, and can be substituted, such as vinylimidazole, methylimidazole, and picoline.

$R^3$ can be a single bond or alkylene, preferably containing from 1 to 4 carbon atoms, such as methylene, ethylene, isopropylene or butylene.

$R^4$ and $R^5$ are independently metal chelating groups (any group which will donate a pair of electrons to a metal ion) including a salt thereof (e.g., an alkali metal salt, a quaternary ammonium salt) or a hydrolyzable precursor thereof (e.g., a hydrolyzable acyl or ester group), for example, hydroxy; amino; carboxy; sulfonamido; sulfamoyl; a hydrolyzable ester group having the formula $-OCOR^2$, $-OCOOR^2$, $-OCON(R^2)_2$ or $-COOR^2$, wherein $R^2$ is an alkyl group having from 1 to 4 carbon atoms or an aryl having from 6 to 8 carbon atoms.

Preferred chelating groups are $-OH$, $-COOH$, $-NHR^{11}$, $-NHCOR^{12}$, $-NHSO_2R^{13}$, $-C(R^{11})=O$, $-C(R^{11})=NR^{13}$ and $-SO_2NHR^{11}$, wherein $R^{11}$ is hydrogen or an alkyl group of from 1 to 6 carbon atoms; $R^{12}$ is an alkyl group of from 1 to 4 carbon atoms; $R^{13}$ is an alkyl group containing from 1 to 4 carbon atoms, aryl, preferably containing from 6 to 10 carbon atoms, including substituted aryl, or $NHR^{14}$, wherein $R^{14}$ is aryl containing from 6 to 10 carbon atoms or $-CONH_2$.

The polymer and metal ions form a metallized polymer comprising a recurring unit of the formula:

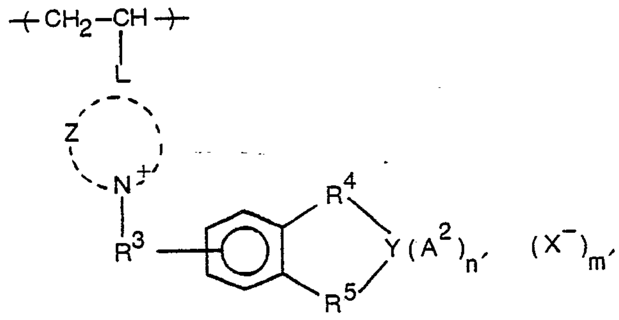

wherein:

L, Z, $R^3$, $R^4$, $R^5$, Y and X are as defined above;

n' is an integer of 1 to 4;

$A^2$ is a mono- or multidentate ligand; and

m' is 0 or an integer.

Copolymerized with the monomers described to form a polymer of the invention can be any α,β-ethylenically unsaturated monomer which is addition polymerizable. Examples of such monomers are styrene, acrylic esters, such as methyl methacrylate, butyl acrylate, butyl methacrylate and ethyl acrylate; amides, such as acrylamide, diacetone acrylamide, N-methylacrylamide and methacrylamide; nitriles, such as acrylonitrile and vinylbenzylnitrile; ketones, such as methyl vinyl ketone, ethyl vinyl ketone and p-vinylacetophenone; halides, such as vinyl chloride, vinylidene chloride and vinylbenzyl chloride; ethers, such as methyl vinyl ether; ethyl vinyl ether and vinylbenzyl methyl ether; α,β-unsaturated acids thereof, such as acrylic acid, methacrylic acid and vinylbenzoic acid; olefins, such as ethylene, propylene and butylene; diolefins, such as butadiene and 2,3-dimethylbutadiene, and other vinyl monomers within the knowledge and skill of an ordinary worker in the art.

The polymer can comprise from 1 to 100 percent by weight of one or more mordanting units and from 0 to 99 percent by weight of the other polymerized ethylenically unsaturated monomer, preferably from 10 to 30 weight percent of mordanting units.

The monomer:

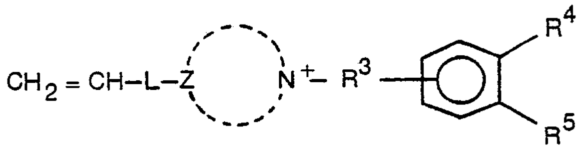

, or a polymeric unit

or a polymeric unit derived therefrom, which is polymerized to form the units of the polymer of this invention, can be prepared by quaternizing a compound, monomeric or polymeric, containing one or more pendant tertiary nitrogen-containing heterocyclic groups, such as those specified in the definition of Z above, with a compound of the formula:

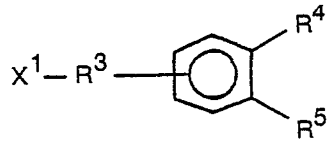

wherein:

$X^1$ is epoxy, halogen, such as chloro, bromo and iodo; toluenesulfonate; and methanesulfonate.

The quaternization reaction can be carried out under a variety of conditions, but usually is carried out by reacting the reagents in a suitable solvent, e.g., water, methanol or dimethylformamide at elevated temperatures, e.g., up to 100°C for several hours, e.g., 2 to 24 hours.

The polymer is formed by merely polymerizing the monomer or copolymerizing the monomers in a conventional manner, such as bulk, solution,, suspension or emulsion polymerization techniques. Polymerization catalysts, such as 2,2'-azo-bis-(2-methylpropionitrile) and 4,4'-azo-bis-(4-cyanovaleric acid) may be used, preferably in concentrations of from 1 to 5 mole percent and the polymerization can be carried out at temperatures such as 60 to 100°C and generally at any pressure.

Specifically, in a most preferred embodiment, the polymer also contains mordant units according to the formula:

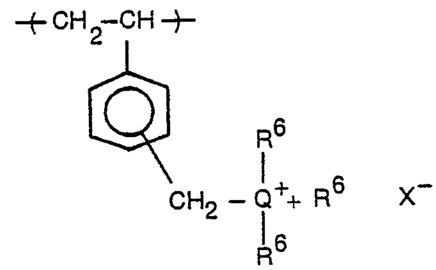

wherein:

Q is nitrogen or phosphorous, X is as defined above, and

$R^6$ is a cyclic or an alkyl group.

The most preferred polymer containing units, such as those having the formula above wherein two of $R^6$ are alkyl of 1 to 12 carbon atoms and the remaining $R^6$ is benzyl.

Metal ions useful in this invention include polyvalent metal ions, such as copper (II), zinc (II), nickel (II), platinum (II), palladium (II) and cobalt (II) ions. Most preferred are nickel (II) and copper (II).

The metal ions which may be coordinated to the polymer can be derived from any source of metal ions, such as a solution of a salt of the metal ions in water, or a solvent, such as methanol, ethanol or N,N-dimethylformamide. Preferred sources of metal ions are water-soluble salts, such as water-soluble nickel chloride, sulfate, nitrate, and water-soluble copper chloride, sulfate or nitrate.

The amount of metal ions used for the metal complexes of the present polymers is preferably sufficient to provide each chelating group with about one metal ion.

The metal ions and polymer when mixed together in soluble form a coordination complex. The coordination reaction will proceed at any temperature and pressure and without the aid of a catalyst. The polymer-metal coordination complex, if soluble, can then be coated as a single layer on a photographic recording material in any conventional coating manner such as coating in a solvent or water with a mordant to form an image-receiving layer. As an alternative, the source of metal ions can be coated in an adjacent (either next adjacent or in a further layer with easy access) layer to the polymer containing layer. The diffusing metal ions will coordinate to the polymer and will be prevented from wandering past the polymer containing layer. If the coordinated polymer-metal complex is insoluble, layers thereof are preferably prepared by first coating a solution of a soluble salt of the metal, then overcoating with a solution or dispersion of the polymer. While wet, the metal migrates to the polymer to form the insoluble complex in situ.

The metal to mordant molar ratio is generally from ~1:2 to ~1:50 and preferably ~1:5 to ~1:20.

The present polymers and their corresponding metal complexes may be used in the photographic materials described and claimed in the parent European-Specification 0,009,411.

The following examples are presented for a further understanding of the invention.

Example 1

Poly(N-vinylbenzyliminodiacetic acid disodium salt)

A slurry of 100 g of N-vinylbenzyliminodiacetic acid in 1l of water was adjusted to pH 5.5 by the addition of 50% sodium hydroxide solution. The resultant solution was decolorized by stirring with 1 g of activated carbon for 15 minutes. The carbon was removed by filtration and 500 mg of potassium persulfate was added. The solution was then flushed with nitrogen and heated for 60°C overnight. The polymer

solution was enclosed in cellulose bags and dialyzed against distilled water for 6 hours. Freeze drying the dialysate gave 100 g of product.

*Anal.* calcd. for $C_{13}H_{13}NO_4Na$: C, 57.8; H, 9.8; N, 5.2; Na, 8.5.
Found: C, 56.1; H, 5.3; N, 5.2; Na, 8.2.
$[\eta]_{0.1N\ NaCl}$ = 1.63 measured at 25°C.

Example 2

Poly(N-vinylbenzyliminodiacetic acid disodium salt-co-sodium acrylate) $(1:1)_w$

A mixture of 30 g of acrylic acid and 30 g of N-vinylbenzyliminodiacetic acid in 500 ml of water was adjusted to pH 5.5 by the addition of 50% sodium hydroxide solution and the resultant solution was decolorized by stirring with 1 gram of activated carbon. The carbon was removed by filtration and 300 mg of potassium persulfate was added. The solution was then flushed with nitrogen and heated at 60°C overnight. The polymer solution was enclosed in cellulose bags and dialyzed for 6 hours. Freeze drying gave 58 g of product.

Example 3

Poly(N-vinylbenzyliminodiacetic acid-co-4-vinylpyridine) $(1:1)_w$

A slurry of 15 g of N-vinylbenzyliminodiacetic acid in 270 ml of water was adjusted to pH 5.5 by the addition of 50% sodium hydroxide solution. To the resultant solution was added 15 g of distilled 4-vinylpyridine and 150 mg of potassium persulfate. The solution was then purged with $N_2$ and stirred at 60°C overnight. A viscous solution was formed which was diluted up to one liter with water, encased in cellulose bags, and dialyzed for 24 hours. The polymer was isolated by freeze drying the dialysate.
Yield = 26 g.

*Anal.* Found: C, 62.1; H, 5.8; N, 8.1.
$[\eta]_{0.1N\ NaCl}$ = 1.29 measured at 25°C.

Example 4

Poly(acrylamide-co-N-vinylbenzyliminodiacetic acid disodium salt) $(80:20)_w$

A slurry of 10 g of N-vinylbenzyliminodiacetic acid in 350 ml of water was adjusted to pH 5.5 by the addition of 50% sodium hydroxide solution. To the resultant solution was added 100 ml of ethanol, 40 g of acrylamide, and 250 mg of potassium persulfate. The reaction was then flushed with nitrogen and heated at 60°C overnight. The viscous polymer solution was diluted with 835 ml of water, and one third was dialyzed overnight. The dialysate was freeze dried to yield 16 g of product.

*Anal.* Found: C, 47.1; H, 6.6; N, 14.8.
$[\eta]_{0.1N\ NaCl}$ = 1.31 measured at 25°C.

To another one third portion of the above crude polymer solution (13.4 meq chelate sites) was added dropwise 13.4 ml of 1N nickel(II) chloride which had been diluted to 40 ml with water. A polymeric chelate separated in the form of a dispersion. The particle size of the nickel chelate dispersion was less than 1μ. The dispersion was dialyzed overnight to remove uncomplexed nickel. The purified dispersion was found to contain 6.2 mg of nickel per ml of solution at 6.1% solids.

Example 5

Poly(N-vinylbenzyliminodiacetic acid disodium salt-co-N-vinylimidazole) $(1:1)_w$

A slurry of 5.0 g of N-vinylbenzyliminodiacetic acid in 90 ml of water was adjusted to pH 5.5 by the addition of 50% sodium hydroxide solution. To the resultant solution was added 5 g of N-vinylimidazole and a solution of 50 mg of 2,2′-azobis[2-methylpropionitrile] in 5 ml of acetone. The reaction vessel was purged with nitrogen and stirred at 60°C overnight. The viscous polymer solution was then diluted with 250 ml of water and dialyzed overnight. Freeze drying gave 9 g of product.

*Anal.* Found: C, 54.7; H, 4.9; N, 10.8.
$[\eta]_{1N\ NaCl}$ = 1.67 measured at 25°C.

Example 6

Poly(sodium 2-sulfoethyl methacrylate-co-N-vinylbenzyliminodiacetic acid nickel(II) chelate) $(1:1)_w$

A slurry of 40 g of N-vinylbenzyliminodiacetic acid in 720 ml of water was adjusted to pH 5.5 by the addition of 50% sodium hydroxide solution. To the resultant solution was added 44.6 g of sodium 2-sulfoethyl methacrylate and 800 mg of potassium persulfate. The reaction vessel was purged with nitrogen and the solution was stirred at 60°C overnight. The polymer dope was diluted with 1340 ml of water and a solution of 162 ml of 1N nickel(II) chloride solution that had been diluted to 535 ml with water was added dropwise. A soluble, light green polymeric chelate was formed. The solution was dialyzed overnight to remove uncomplexed nickel ions and was then concentrated to 7.6% solids. It was determined by atomic

absorption spectroscopy that the sample contained 7.04 mg of nickel per ml of solution.

Example 7

Poly(1-vinylimidazole)-co-(1-vinyl-3-benzylimidazolium chloride)-co-[1-vinyl-3-(3-aceto-4-hydroxybenzyl)imidazolium chloride]

Poly(1-vinylimidazole) ($10^{-1}$ mole, 9.4 g) was dissolved in methanol (400 ml) and reacted with 3-aceto-4-hydroxybenzyl chloride ($2.5 \times 10^{-2}$ mole, 4.6 g) for 6 hours at the reflux temperature of the mixture. Benzyl chloride ($7.5 \times 10^{-2}$ mole, 9.5 g) was then added and the reaction mixture was left refluxing for another 2 days. The solvent was evaporated down to about 200 ml and the mixture was precipitated into ethyl acetate. The solid was filtered off and dried under vacuum to give about 16 g of a slightly yellow solid.

The resulting poly[1 - vinylimidazole - co - 1 - vinyl - 3 - benzylimidazolium chloride - co - 1 - vinyl - 3 - (3 - aceto - 4 - hydroxy - benzyl)imidazolium chloride] (9.4 g) was dissolved in water (800 ml) and copper(II) ethylenediamine chloride (3 g) in water (100 ml) was added dropwise. The mixture was left stirring for 30 minutes and then "diafiltered" using a UM2 "Diaflo" (trademark) dialysis membrane at $3.5 \times 10^5$ Pascals. The residue was freeze-dried to give about 12 g of the final product.

The metallized polymer (1.39 g) was dissolved in demineralized water (39.75 ml), 10% aqueous gelatin (6.25 ml), 10% aqueous p-nonylphenoxypolyglycidol (1.5 ml) and 30% methanolic 1,4-butanediol diglycidyl ether (2.5 ml) were added. The mixture was coated onto 0.18 mm thick subbed poly(ethylene terephthalate) transparent film base. During coating, the coating support was held horizontally on a flat bed and the coating mixture was spread over the support using a 0.23 mm undercut blade, giving a coating laydown of about 130 ml/m². Coatings were hardened at 46°C for 7 days.

Strips of the coating were dyed by dipping into a 0.1 weight percent solution of 3-(2-hydroxy-1-naphthylazo)-4-hydroxybenzenesulphonamide dye in a 0.1N NaOH. The strips were left in the solution long enough (usually 2 minutes) to give a maximum dye optical density of about 2. The strips were then washed with demineralized water and dried at room temperature.

Sample strips of the coating were also dyed by laminating to coatings of the above dye in gelatin (prepared as described below) using a thickened alkaline processing solution (40 g/l NaOH, 28 g/l hydroxyethyl cellulose). The laminates were peeled apart after 5 minutes and the separated layers washed in demineralized water and dried.

The light stability of the above dyed strips was considerably improved compared with similar control strips containing unmetallized mordant.

The dye in gelatin was coated to give a dye laydown of 0.27 g/m². The dye dispersion was prepared by mixing a solution of the dye (1 g) in cyclohexanone (25 ml) and dimethylformamide (10 ml) with a 4.2% aqueous gelatin solution (378 g) containing the surfactant isopropylnaphthalenesulphonate (1 g). The mixture was agitated ultrasonically and finally diluted with water to 400 ml.

Example 8

Reaction of latex containing reactive pendant groups with chelating reagents

*Part A* — Preparation of reactive latex

To a 2-liter, 4-neck flask was charged 1000 ml of distilled water. The water was heated to 90°C and stirred under a nitrogen purge for 20 minutes, then cooled to 60°C. To the water was added 6.0 g of Triton X—100 (trade mark), 10.0 g of sodium styrenesulphonate, 189 g of vinylbenzyl chloride and 1.0 g of divinylbenzene. The mixture was stirred rapidly under nitrogen for 10 minutes, after which 2.0 g of $(NH_4)_2S_2O_8$ was added. Stirring was continued for 4 hours at 60°C, after which an additional 0.5 g of $(NH_4)_2S_2O_8$ and 0.3 g of $Na_2S_2O_5$ were added and the temperature increased to 90°C for 1.5 hours. After cooling, the latex was filtered and dialyzed against distilled water.

*Part B* — Reaction of reactive latex with chelating group

A 100 g sample of poly(vinylbenzyl chloride-co-divinylbenzene-co-sodium styrenesulfonate) (weight ratio 94.5/0.5/5) from Part A was treated with one equivalent (based upon vinylbenzyl chloride) of disodium iminodiacetic acid dissolved in 75 ml of water. The mixture was stirred for 48 hours at pH = 10, then dialyzed against distilled water for 6 hours.

*Part C* — Metallization of chelating latex

To a 50 g sample of the material prepared in Part B was added a solution of 12.3 g of $Ni(NO_3)_2.6H_2O$ in 25 ml of water. The mixture was stirred for 1 hour, then dialyzed for 18 hours against distilled water.

Example 9

A series of polymer-containing coatings were prepared by coating poly(ethylene terephthalate) film supports as described below.

*Coating 1* — A two-layer coating containing

(1) a first (bottom) layer comprising gelatin at 1.08 g/m² and nickel sulfate at 0.63 g/m² and

(2) a top layer comprising gelatin at 2.16 g/m² and carboxymethyl cellulose (CMC) 2.16 g/m².

*Coating 2* — A single-layer coating comprising gelatin at 2.16 $g/m^2$ and carboxymethyl cellulose at 2.16 $g/m^2$.

*Coating 3* — A single-layer coating comprising gelatin at 2.16 $g/m^2$ and cellulose acetate hydrogen phthalate (CA) at 2.16 $g/m^2$.

*Coating 4* — A two-layer coating containing

(1) a bottom layer comprising gelatin at 1.08 $g/m^2$ and nickel sulfate at 0.63 $g/m^2$ and

(2) a top layer comprising gelatin at 2.16 $g/m^2$ and cellulose acetate hydrogen phthalate at 2.16 $g/m^2$.

*Coating 5* — A single-layer coating comprising gelatin at 2.16 $g/m^2$ and poly(4-vinylpyridine-*co*-vinylbenzyliminodiacetic acid) (weight ratio 1:1) VBA at 3.51 $g/m^2$.

*Coating 6* — A two-layer coating containing

(1) a bottom layer comprising gelatin at 1.08 $g/m^2$ and nickel sulfate at 0.58 $g/m^2$ and

(2) a top layer comprising gelatin at 2.16 $g/m^2$ and VBA at 3.51 $g/m^2$.

A thin overcoat layer comprising gelatin and bisvinylsulfonylmethyl ether at 2% by weight of the total gelatin was also applied to all coatings.

To test retention of nickel ion by the polymeric coatings prepared above, separate samples of these coatings were laminated to each other as indicated in the following table. Viscous solution comprising a pH 5.0 buffer and carboxymethyl cellulose as a thickener was spread between the layers of each laminate. After 24 hours at room temperature, the samples were separated, washed, dried and then analyzed for nickel. The results were recorded in the following table.

TABLE II

| Laminate | Coating | Ni | Coating | Ni |
|---|---|---|---|---|
| Coatings 1 and 5 | 1 | 5.4 | 5 | 124 |
| Coatings 2 and 6 | 2 | 5.4 | 6 | 120 |
| Coatings 3 and 6 | 3 | 5.4 | 6 | 118 |
| Coatings 4 and 5 | 4 | 5.4 | 5 | 136 |

These data show that the Ni is retained far more strongly by the VBA of the present invention than by either the CMC or the CA. Even when Ni is initially coated under the CMC or CA, it migrates to the VBA layer.

Example 10

Poly(acrylamide-co-N-vinylbenzyliminodiacetic acid disodium salt) $(80:20)_w$

A slurry of 10 g of N-vinylbenzyliminodiacetic acid in 350 ml of water was adjusted to pH 5.5 by the addition of 50 percent sodium hydroxide solution. To the resultant solution was added 100 ml of ethanol, 40 g of acrylamide, and 250 mg of potassium persulfate. The reaction was then flushed with nitrogen and heated at 60°C overnight. The viscous polymer solution was diluted with 835 ml of water, and one-third was dialyzed overnight. The dialysate was freeze-dried to yield 16 g of product.

*Anal.* Found: C, 47.1; H, 6.6; N, 14.8

$[\eta]_{0.1N\ NaCl}$ = 1.31 measured at 25°C.

To another one-third portion of the above crude polymer solution (13.4 meq chelate sites) was added dropwise 13.4 ml of 1N nickel(II) chloride which had been diluted to 40 ml with water. A polymeric chelate separated in the form of a dispersion. The particle size of the nickel chelate dispersion was less than 1μ. The dispersion was dialyzed overnight to remove uncomplexed nickel. The purified dispersion was found to contain 6.2 mg of nickel per ml of solution at 6.1 percent solids.

Example 11

Poly(sodium 2-sulfoethyl methacrylate-co-N-vinylbenzyliminodiacetic acid nickel(II) chelate) $(1:1)_w$

A slurry of 40 g of N-vinylbenzyliminodiacetic acid in 720 ml of water was adjusted to pH 5.5 by the addition of 50 percent sodium hydroxide solution. To the resultant solution was added 44.6 g of sodium 2-sulfoethyl methacrylate and 800 mg of potassium persulfate. The reaction vessel was purged with nitrogen and the solution was stirred at 60°C overnight. The polymer mixture was diluted with 1340 ml of water and a solution of 162 ml of 1N nickel(II) chloride solution that had been diluted to 535 ml with water was added dropwise. A soluble, light-green polymeric chelate was formed. The solution was dialyzed overnight to remove uncomplexed nickel ions and was then concentrated to 7.6 percent solids on the rotary evaporator. It was determined by atomic absorption spectroscopy that the sample contained 7.04 mg of nickel per ml of solution.

Example 12

Poly{(1-vinylimidazole)-co-(1-vinyl-3-benzylimidazolium chloride)-co-[1-vinyl-3-(3-aceto-4-hydroxybenzyl)imidazoliumchloride]}

Poly(1-vinylimidazole) ($10^{-1}$ mole, 9.4 g) was dissolved in methanol (400 ml) and reacted with 3-aceto-4-hydroxybenzyl chloride ($2.5 \times 10^{-2}$ mole, 4.6 g) for 6 hours at the reflux temperature of the mixture. Benzyl chloride ($7.5 \times 10^{-2}$ mole, 9.5 g) was then added and the reaction mixture was left refluxing for another two days. The solvent was evaporated down to about 200 ml and the mixture was precipitated into ethyl acetate. The solid was filtered off and dried under vacuum to give about 16 g of a slightly yellow solid.

Preparation of 3-formyl-4-hydroxybenzyl chloride and 3-aceto-4-hydroxybenzyl chloride

The compound was prepared by a modified procedure of Stoermer and Behn (R. Stoermer and K. Behn, *Ber., 34* [1901], 2455). A 500-ml, three-neck flask equipped with a stirrer, thermometer and a gas inlet was charged with salicylaldehyde (61 g), formaldehyde (40 percent aqueous solution, 41 g) and hydrochloric acid (32 weight percent, 60 g). HCl gas was passed into the reaction mixture for 20 hours while the temperature was maintained below 30°C. The resulting dark purple reaction mixture was then treated with hot water ($3 \times 200$ ml) to remove the unreacted paraformaldehyde. The crude product was sublimed at 100°/1 mm to give 34 g of white 3-formyl-4-hydroxybenzyl chloride (40 percent yield in salicylaldehyde), m.p. 90°C.

| | | | |
|---|---|---|---|
| $C_8H_7ClO_2$ requires (percent): | C, 56.31; | H, 4.14; | Cl, 20.82 |
| Found: | C, 56.33; | H, 4.17; | Cl, 20.85 |

Similarly, 3-acetyl-4-hydroxybenzyl chloride was prepared by chloromethylating o-hydroxyacetophenone.

| | | | |
|---|---|---|---|
| $C_9H_9ClO_2$ requires (percent): | C, 58.60; | H, 4.93; | Cl, 19.20 |
| Found: | C, 58.52; | H, 4.94; | Cl, 19.40 |

Example 13

Poly{(- vinylimidazole) - co - (1 - vinyl - 3 - benzylimidazolium chloride) - co - [1 - vinyl - 3 - (3 - aceto - 4 - hydroxybenzyl copper (II) ethylenediamine)-imidazolium chloride]}

Poly(1-vinylimidazole)-co-(1-vinyl-3-benzylimidazolium chloride)-co-[1-vinyl-3-(3-aceto-4-hydroxybenzyl) - imidazolium chloride] (9.4 g) was dissolved in water (800 ml) and copper (II) ethylenediamine chloride (3 g) in water (100 ml) was added dropwise. The mixture was left stirring for 30 minutes and then "diafiltered" using a UM2 "Diaflo" membrane at $3.5 \times 10^5$ Pascals. The residue was freeze-dried to give about 12 g of the final product. "Diaflo" is a trademark of the Amicon Corporation.

Preparation of ethylenediamine copper (II) chloride

$CuCl_2 \cdot 2H_2O$ (17 g) was dissolved in water (100 ml) and ethylenediamine (6 g) was added dropwise. The reaction mixture was poured into acetone (500 ml) and the resulting precipitate was filtered off and dried to give a light blue powder (19 g).

| | | | | | |
|---|---|---|---|---|---|
| $C_2H_8Cl_2CuN_2$ requires (percent): | C, 12.34; | H, 4.16; | Cl, 36.40; | N, 14.40; | Cu, 32.60 |
| Found: | C, 12.18; | H, 4.06; | Cl, 35.25; | N, 14.46; | Cu, 31.30 |

Example 14

The metallized polymer of Example 13 (1.39 g) was dissolved in demineralized water (39.75 ml), 10 percent aqueous gelatin (6.25 ml), 10 percent aqueous p-nonylphenoxypolyglycidol (1.5 ml) and 30 percent methanolic 1,4-butanediol diglycidyl ether (2.5 ml) were added. The mixture was coated onto 0.18 mm thick subbed poly(ethylene terephthalate) transparent film base. During coating, the coating support was held horizontally on a flat bed, and the coating mixture was spread over the support using a 0.23 mm undercut blade, giving a coating laydown of about 1.2 ml/square meter.

Coatings were hardened at 46°C for 7 days and then strips thereof were dyed by dipping into a 0.1 weight percent solution of 3-(2-hydroxy-1-naphthylazo)-4-hydroxybenzenesulphonamide dye in 0.1N NaOH. The strips were left in the solution for about 2 minutes to give a maximum dye optical density of about 2. The strips were then washed with demineralized water and dried at room temperature.

Sample strips of the coating were also dyed by laminating to coatings of the above dye in gelatin (prepared as described below using a thickened alkaline processing solution (40 g/l NaOH, 28 g/l hydroxyethylcellulose). The laminates were peeled apart after 5 minutes and the separated layers washed in demineralized water and dried.

The light stability of the above dyed strips was considerably improved, compared with similar control strips containing unmetallized mordant.

The dye in gelatin was coated to give a dye laydown of 2.5 mg/square meter. The dye dispersion was prepared by mixing a solution of the dye (1 g) in cyclohexanone (25 ml) and dimethylformamide (10 ml) with a 4.2 percent aqueous gelatin solution (378 g) containing the surfactant

isopropylnaphthalenesulphonate (1 g). The mixture was agitated ultrasonically and finally diluted with water to 400 ml.

**Claims**

1. A polymer comprising units of the formula:

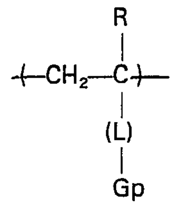

wherein:

R is H, halogen or an alkyl group containing from 1 to 6 carbon atoms;

L is a single bond or a bivalent linking group between the carbon atom of the vinyl group and Gp; and

Gp is a group having one of the following formulae:

$$—N(CH_2COO^-M^+)_2;$$

or

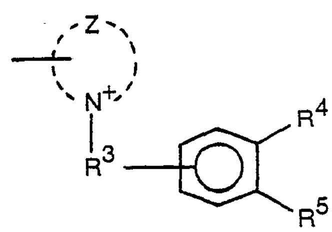

$X^-$ ;

wherein $M^+$ is $H^+$ or an ammonium or alkali metal cation,

Z represents the atoms necessary to complete a heterocyclic nucleus which may be substituted;

$X^-$ is an anion;

$R^3$ is a single bond or an alkylene group; and

$R^4$ and $R^5$ are independently chelating groups.

2. A polymer comprising units of the formula:

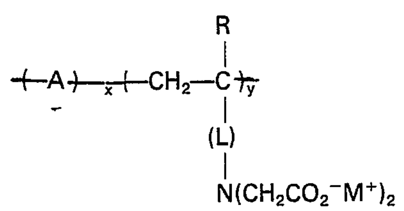

wherein R, L and $M^+$ have the meanings given in Claim 1;

A is the unit:

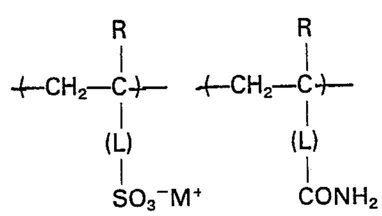

or

x is from 20 to 95 weight percent; and

y is from 80 to 5 weight percent.

3. A polymer according to claim 2 characterized in that it also contains the unit $-(B)_z-$, wherein B is a recurring unit capable of mordanting photographic dyes, and z is present in an amount of up to 60 weight percent.

4. A polymer according to claim 1, 2 or 3 characterised in that L is phenylenemethylene, phenylene, carbonyloxyethylene, 2-carbonylimino-2-methyl-1, 2-propylene or carbonyliminoethylene and M is hydrogen, ammonium, tetraethylammonium, potassium, sodium or lithium.

5. A polymer according to claim 1 wherein Z is an imidazole, pyridine, quinoline, isoquinoline, phenanthridine, phenanthroline, pyrimidine, benzothiazole, benzothiadiazole, purine, pyrazine or acridine nucleus.

6. A polymer according to any of claims 1, 4 and 5 wherein $R^4$ and $R^5$ are independently a hydroxy, amino, carboxy, sulphonamido, sulphamoyl, a hydrolysable group of the formula $—OCOR^2$, $—OCOOR^2$, $OCON(R^2)_2$ or $—COOR^2$ wherein $R^2$ is an alkyl group having from 1 to 4 carbon atoms or an aryl group having from 6 to 8 carbon atoms.

7. A polymer according to claim 1, 4, 5 or 6 wherein $R^3$ is a single bond or an alkylene group containing from 1 to 4 carbon atoms.

8. A metal complex with any of the polymers of claims 1—7.

**Patentansprüche**

1. Polymer mit Einheiten der Formel:

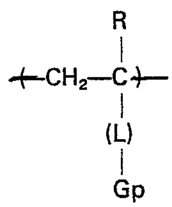

in der bedeuten:

R ein Wasserstoff- oder Halogenatom oder eine Alkylgruppe mit 1 bis 6 Kohlenstoffatomen;

L eine einfache Bindung oder eine bivalente Gruppe zwischen dem Kohlenstoffatom der Vinylgruppe und Gp und

Gp eine Gruppe einer der folgenden Formeln:

$—N(CH_2COO^-M^+)_2$;

oder

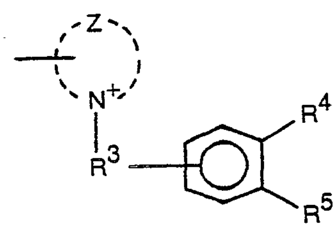

$X^-$ ;

worin $M^+$ für $H^+$ oder ein Ammonium- oder Alkalimetallkation steht;

Z die Atome darstellt, die für die Vervollständigung eines heterocyclischen Kernes erforderlich sind, der substituiert sein kann;

$X^-$ ein Anion ist,

$R^3$ eine einfache Bindung oder eine Alkylengruppe darstellt und

$R^4$ und $R^5$ unabhängig voneinander Chelatbildnergruppen sind.

2. Polymer mit Einheiten der Formel:

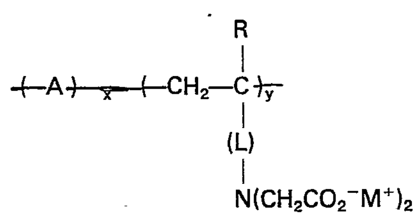

in der R, L und $M^+$ die in Anspruch 1 angegebene Bedeutung haben,

A eine Einheit der folgenden Formel ist:

oder

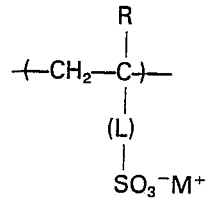 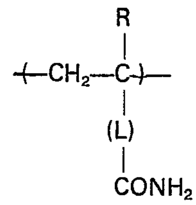

x ein Zahlenwert ist, der bedeutet, daß die Einheit zu 20 bis 95 Gew.-% vorliegt und
y ein Zahlenwert ist, der bedeutet, daß die Einheit zu 80 bis 5 Gew.-% vorliegt.

3. Polymer nach Anspruch 2, dadurch gekennzeichnet, daß es ferner die Einheit $(-B)_z$ aufweist, in der B eine widerkehrende Einheit darstellt, die photographische Farbstoffe zu beizen vermag und z besagt, daß die Einheit in Mengen bis zu 60 Gew.-% vorliegen kann.

4. Polymer nach Anspruch 1, 2 oder 3, dadurch gekennzeichnet, daß L für eine Phenylenmethylen-, Phenylen-, Carbonyloxyethylen-, 2-Carbonylimino-2-methyl-1, 2-propylen- oder Carbonyliminoethylengruppe steht und M für ein Wasserstoffatom, eine Ammonium- oder Tetraethylammoniumgruppe, ein Kalium-, Natrium- oder Lithiumatom.

5. Polymer nach Anspruch 1, dadurch gekennzeichnet, daß Z für die Atome steht, die einen Imidazol-, Pyridin-, Chinolin-, Isochinolin-, Phenanthridin-, Phenanthrolin-, Pyrimidin-, Benzothiazol-, Benzothiadiazol-, Purin-, Pyrazin- oder Acridinkern vervollständigen.

6. Polymer nach einem der Ansprüche 1, 4 und 5, dadurch gekennzeichnet, daß $R^4$ und $R^5$ unabhängig voneinander Hydroxy-, Amino-, Carboxy-, Sulphonamido-, Sulphamoylkgruppen, hydrolysierbare Gruppen der Formeln $-OCOR^2$, $-OCOOR^2$, $-OCON(R^2)_2$ oder $-COOR^2$, worin $R^2$ eine Alkylgruppe mit 1 bis 4 Kohlenstoffatomen ist oder Arylgruppe mit 6 bis 8 Kohlenstoffatomen darstellen.

7. Polymer nach Anspruch 1, 4, 5 oder 6, dadurch gekennzeichnet, daß $R^3$ für eine einfache Bindung oder eine Alkylengruppe mit 1 bis 4 Kohlenstoffatomen steht.

8. Metallkomplex mit einem der Polymeren gemäß Ansprüchen 1 bis 7.

**Revendications**

1. Polymère comprenant des motifs de formule:

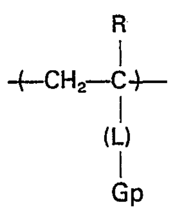

dans laquelle:

R est un atome d'hydrogène ou d'halogène, ou un groupe alkyle contenant de 1 à 6 atomes de carbone;

L est une liaison simple ou un groupement de liaison bivalent entre l'atome de carbone du groupe vinyle et Gp; et,

Gp est un groupement correspondant à l'une des formules suivantes:

$$-N(CH_2COO^-M^+)_2;$$

ou

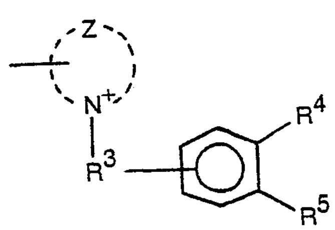

$X^-$ ;

dans lesquelles:

$M^+$ est $H^2$ ou un cation ammonium ou métal alcalin,

Z représente les atomes nécessaires pour compléter un noyau hétérocyclique qui peut être substitué;

$X^-$ est un anion;

$R^3$ est une liaison simple ou un groupe alkylène; et

$R^4$ et $R^5$ sont, indépendamment, des groupes de coordination.

2. Polymère comprenant des motifs de formule:

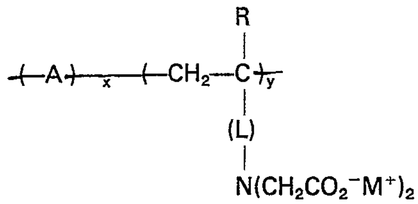

dans laquelle:

R, L et $M^+$ ont les significations données à la revendication 1;

A est un motif de formule:

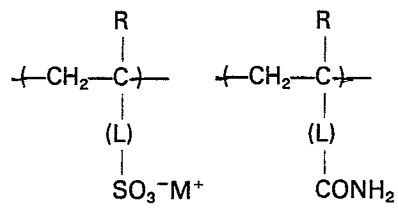

ou

x est un pourcentage en masse compris entre 20 et 95;

y est un pourcentage en masse compris entre 80 et 5.

3. Polymère selon la revendication 2, caractérise en ce qu'il contient aussi le motif $(-B)_z-$, dans lequel B est un motif capable de mordancer des colorants photographiques, et z est inférieur ou égal à 60% en masse.

4. Polymère selon les revendications 1, 2 ou 3, caractérisé en ce que L est un groupe phénylèneméthylène, phénylène, carbonyloxyéthylène, 2-carbonylimino-2-méthyl-1, 2-propylène ou carbonyliminoéthylène, et M est l'hydrogène, l'ammonium, le tétraéthylammonium, le potassium, le sodium, ou le lithium.

5. Polymère selon la revendication 1, dans lequel Z est un noyau imidazole, pyridine, quinoline, isoquinoline, phénanthridine, phénanthroline, pyrimidine, benzothiazole, benzothiadiazole, purine, pyrazine ou acridine.

6. Polymère selon l'une quelconque des revendications 1, 4 et 5, dans lequel $R^4$ et $R^5$ sont indépendamment un groupe hydroxy, amino, carboxy, sulfonamido, sulfamoyl, un groupe hydrolysable de formule $—OCOR^2$, $—OCOOR^2$, $—OCON(R^2)_2$ ou $—COOR^2$, dans lequel $R^2$ est un groupe alkyle de 1 à 4 atomes de carbone ou un groupe aryle de 6 à 8 atomes de carbone.

7. Polymère selon les revendications 1, 4, 5 ou 6, dans lequel $R^3$ est une simple liaison ou un groupe alkylène contenant de 1 à 4 atomes de carbone.

8. Complexe métallique avec l'un des polymères des revendications 1 à 7.